# EUROPEAN PATENT SPECIFICATION

(11) **EP 0 631 564 B1**
(45) Date of publication and mention of the grant of the patent: **26.05.1999**
(21) Application number: 93908492.7
(22) Date of filing: 18.03.1993
(51) Int. Cl.: C01B 3/58, B01D 53/62, C10K 3/04

(54) **METHOD OF AND APPARATUS FOR REMOVING CARBON MONOXIDE FROM GASEOUS MEDIA**
VERFAHREN UND VORRICHTUNG ZUR ENTFERNUNG VON KOHLENMONOXID
PROCEDE ET APPAREIL D'ELIMINATION DU MONOXYDE DE CARBONE CONTENU DANS DES MILIEUX GAZEUX

(30) Priority: 19.03.1992 US 853663; 19.03.1992 US 853668
(43) Date of publication of application: 04.01.1995
(60) Divisional application: 98111445.7
(73) Proprietor: INTERNATIONAL FUEL CELLS CORPORATION, South Windsor Connecticut 06074 (US)
(72) Inventor: TROCCIOLA, John, C., Glastonbury, CT 06033 (US); SCHROLL, Craig, R., Glastonbury, CT 06033 (US); LESIEUR, Roger, R., Enfield, CT 06082 (US)
(74) Representative: Tomlinson, Kerry John
(86) International application number: US9302660
(87) International publication number: WO9319005

(56) References cited:
- GB-A- 2 206 062

## Description

### Technical Field

The present invention relates to the treatment of gases in general, and more particularly to a method of and an apparatus for removing carbon monoxide from gaseous media.

### Background Art

There are already known various methods of and apparatus constructions for removing carbon monoxide from gaseous media, among them such capable of removing carbon monoxide by oxidation in the presence of gaseous oxygen from gaseous media that additionally contain other oxidizable or otherwise reactable substances, such as hydrogen, using catalysts that selectively or preferentially promote the desired conversion of carbon monoxide to carbon dioxide.

One such approach is disclosed in an article authored by M. L. Brown et al titled "Purifying Hydrogen by . . . Selective Oxidation of Carbon Monoxide", appearing in Volume 50, No. 10 of Industrial and Engineering Chemistry, pp. 841-844 (1960). As discussed there in the context of ammonia synthesis, certain catalysts, such as alumina-supported platinum, are capable of selectively promoting the oxidizing reaction of carbon monoxide to carbon dioxide with only small or negligible losses of hydrogen contained in the gaseous medium being treated to water formation, so long as the temperature at which the reaction takes place is above a threshold temperature. However, it is also disclosed in this article that there is a relatively high limiting value below which the carbon monoxide concentration cannot be reduced when the oxidation reaction is conducted at such relatively high temperatures in a single stage. This limitation is primarily if not exclusively attributable to a reverse shift reaction in which carbon dioxide reacts with hydrogen to form carbon monoxide and water. On the other hand, this article also mentions that, when it was attempted to conduct the selective oxidation reaction on the incoming gaseous medium, which has a relatively high carbon monoxide concentration, at temperatures below the threshold temperature, the catalyst very rapidly became ineffective and did not become effective again merely as a result of a subsequent raising of the reaction temperature to above the threshold temperature; rather, it was necessary first to purge the catalyst using a gaseous medium substantially devoid of carbon monoxide at temperatures above the threshold temperature, followed by conducting the selective oxidation reaction at such elevated temperatures. Thus, this article indicates that it is impossible or at least not feasible to treat the incoming gaseous medium at temperatures below the threshold temperature.

Yet, even in the above context, it is often desirable to reduce the carbon monoxide concentration to below the limiting value before the gaseous medium is supplied to the ammonia synthesis equipment proper. To this end, the above article proposes to use two consecutive selective carbon monoxide oxidation stages, with a carbon dioxide removal apparatus being interposed between such consecutive oxidation stages. Even here, however, the selective oxidation reaction is conducted at above the threshold temperature in both of the oxidation stages; yet, because of the removal of the carbon dioxide from the gaseous medium between the two oxidation stages and the resulting dearth of carbon dioxide that could participate in the aforementioned reverse shift reaction from the gaseous medium entering the second oxidation stage, the severity of such reaction in the second oxidation stage is drastically reduced, resulting in a carbon monoxide concentration in the gaseous medium leaving the second oxidation stage that is considerably below that achievable in the first oxidation stage or, for that matter, in a single-stage oxidation device.

Even the latter approach, however, leaves much to be desired. For one, the need for providing the carbon removal device between the two selective oxidation stages not only increases the complexity of the gaseous medium treatment equipment, but also significantly adds to its cost. Moreover, and possibly more importantly, there is still a limit, albeit lower than in the single-stage approach, below which the carbon monoxide concentration cannot be reduced when using the two-stage approach. Yet, there are applications, such as in treating a gaseous fuel to be supplied to a fuel cell, where even such a reduced carbon monoxide concentration is undesirably high.

Accordingly, it is an object of the present invention to develop a method of and design an apparatus for selectively removing carbon monoxide from a gaseous medium by oxidation in such a manner as to minimize the carbon monoxide content in the treated medium even at at varying loads, without the need for removing carbon dioxide from the medium being treated

### Disclosure of the Invention

In keeping with these objects and others which will become apparent hereafter, one feature of the present invention resides in a method of reducing to a desired minimum level the concentration of carbon monoxide in a gaseous medium that also contains at least hydrogen. Such reduction is accomplished by selective catalytic oxidation in the presence of gaseous oxygen using a catalyst which is capable of oxidizing carbon monoxide in an exothermic reaction at temperatures within a given temperature range, but is rapidly inactivated when exposed to high carbon monoxide concentrations at less than a threshold temperature within the given temperature range, and incapable of reducing the carbon monoxide concentration to the minimum level when exposed to carbon monoxide at above the threshold temperature. This method includes confining a quantity of the catalyst having an inlet portion and an outlet portion, passing the gaseous medium through the confined catalyst quantity from the inlet portion to the outlet portion thereof, and introducing gaseous oxygen into at least the inlet portion of the confined catalyst quantity. According to the present invention, the temperatures encountered in the confined catalyst quantity are controlled in such a manner that the exothermic reaction takes place at above, and at below, the threshold temperature in the inlet portion and the outlet portion, respectively. In a preferred embodiment of the present invention that is particularly useful when the volume of the gaseous medium to be treated varies, at least the outlet portion of the catalyst quantity is subdivided into a plurality of separate catalyst beds, the amount of the gaseous medium to be treated is determined, and such amount is directed through only as many of the separate catalyst beds of the outlet portion as needed to achieve a flow rate of the gaseous medium therethrough that is sufficiently high to avoid any significant reverse shift of carbon dioxide to carbon monoxide, due to reaction with hydrogen, at least in the respective addressed bed of the outlet portion.

### Brief Description of the Drawing

The present invention will be described in more detail below with reference to the accompanying drawing in which:
Figure 1 is a somewhat simplified side elevational view, partly in cross section and partly in block diagram form, of a selective oxidizing apparatus constructed in accordance with the present invention as used for treating gaseous fuel for a fuel cell device;
Figure 2 is a graphic representation of test results obtained by running an experimental apparatus akin to that of Figure 1 and indicating the significant carbon dioxide reduction achieved when performing the method of the present invention at various flow rates;
Figure 3 is a view similar to that of Figure 1 but showing a modified version of the apparatus of the present invention; and
Figure 4 is a graphic representation of the dependence of the carbon monoxide concentration in the gaseous medium exiting the second of two consecutive catalyst bed stages of the experimental apparatus on the volumetric flow rate of the gaseous medium through such second stage.

### Best Mode for Carrying Out the Invention

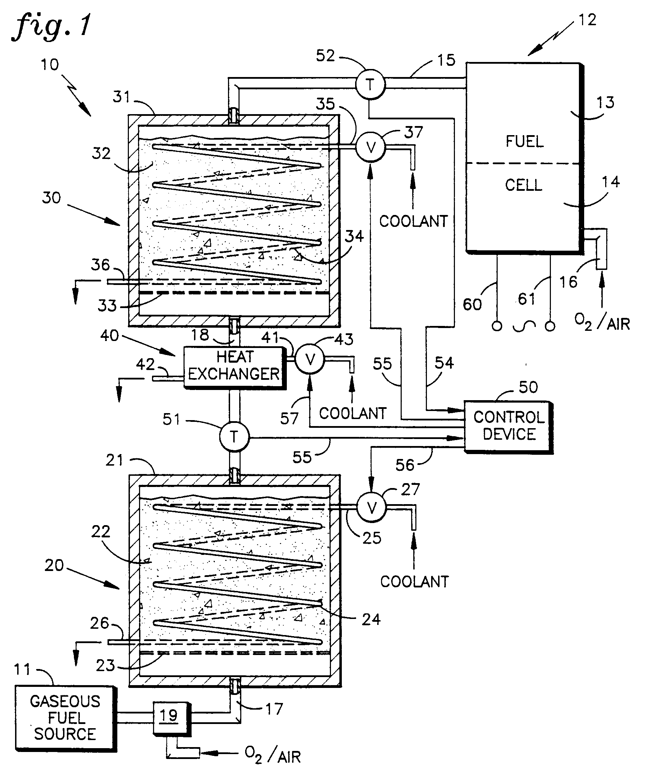

Referring now to the drawing in detail, and first to Figure 1 thereof, it may be seen that the reference numeral 10 has been used therein to identify a selective carbon monoxide removal apparatus constructed in accordance with the present invention. As illustrated, the apparatus 10 is to be used for reducing to a minimum level the concentration of carbon monoxide in a gaseous fuel which is to be supplied from a gaseous fuel source 11 to a fuel cell device 12. While the fuel cell device 12 has been illustrated, for the sake of simplicity, as being constituted by a single fuel cell having an anode side 13 and a cathode side 14, it is to be understood that the fuel cell device 12 can and, as is well known, usually does, contain a multitude of such individual fuel cells arranged in groups, stacks and similar assemblies. Even in this instance, however, the fuel cell device 12 has the anode side 13 to which the treated gaseous fuel is fed through a fuel supply conduit 15, and the cathode side 14 to which a gaseous oxidant, such as oxygen or air, is admitted or supplied through an oxidant supply conduit 16.

The general principles of construction and operation of the fuel cell device 12 are so well known as not to require detailed explanation herein. Suffice it to say that a catalytic electrochemical reaction takes place in the fuel cell device 12, resulting in combination of hydrogen with oxygen into product water, and in generation of a useful output, that is, electric current that is presented at or flows through respective leads or terminals 60 and 61.

Now, as alluded to before, the electrochemical reaction requires for its performance the presence of at least one catalyst, typically a carbon-supported platinum or platinum alloy, in the fuel cell device 12. Catalysts of this kind are known to have a pronounced affinity for carbon monoxide, with the deleterious effect that any carbon monoxide carried to the anode side 13 of the fuel cell device with the gaseous medium or fuel (hydrogen) admitted through the fuel supply conduit 15 will "poison" the anode catalyst or a portion thereof, that is, render it ineffective for promoting the desired electrochemical reaction by attaching itself to the catalyst and thus denying the hydrogen access thereto. The extent of such anode catalyst poisoning determined in part by the concentration (or partial pressure) of carbon monoxide present in the gaseous fuel.

Obviously, this problem does not exist when pure, or substantially pure, hydrogen is being used as the fuel. However, such pure hydrogen is rather expensive and difficult to handle and deliver, so that a search is on in the fuel cell field for ways to utilize alternative fuels, such as methane, natural gas, or other hydrocarbon fuels. Yet, such alternative fuels cannot be used in the fuel cell devices as such; rather, they or their components have to be converted into simpler components, especially hydrogen to be used as the fuel cell fuel, and other components, such as carbon dioxide, which do not deleteriously affect the fuel cell operation or can be easily be removed from the gaseous fuel. Such conversion usually takes place, in accordance with well known principles, in a steam reformer and a shift converter together constituting the gaseous fuel source 11. Unfortunately, experience has shown that it is not possible to achieve complete conversion of the carbon contained in the incoming fuel to carbon dioxide, which means that the gaseous fuel leaving the gaseous fuel source 11 through a discharge conduit 17 contains a relatively high percentage, such as 1%, or 10,000 parts per million (ppm), of carbon monoxide.

As mentioned before, the catalyst present at the anode side 13 of the fuel cell device 12 cannot tolerate carbon monoxide without suffering loss of effectiveness or other damage. Obviously, the speed of deterioration would be extremely high if the gaseous medium exiting the gaseous fuel source 11 were supplied directly to the anode side 13. Therefore, it is crucial to provide for removal of as much of the carbon monoxide from such gaseous medium as possible to assure that the fuel cell device 12 will remain operational over a reasonable lifespan, such as at least 40,000 hours of operation. Ideally, the gaseous medium or fuel would be rid of all carbon monoxide before being admitted to the anode side 13 of the fuel cell device 12, but that is impossible to achieve, at least with the current state of technology. This being so, and considering the fact that the poisoning action of the carbon monoxide on the anode side catalyst is cumulative over the operational life of the fuel cell device 12, it is important to reduce the carbon monoxide concentration in the gaseous fuel supplied to the anode side 13 to a minimum.

To this end, the selective oxidation apparatus 10 of the present invention as illustrated includes two consecutive stages 20 and 30, with the first stage 20 being supplied with the gaseous fuel emerging from the gaseous fuel source 11 through the discharge conduit 17. A heat exchanger 40 is shown to be interposed between the stages 20 and 30, in a connecting conduit 18 extending between such stages 20 and 30 and carrying gaseous fuel discharged from the first stage 20 to the second stage 30. Each of the stages 20 and 30 includes an enclosed vessel or container 21 or 31 which bounds an internal chamber. A respective body or bed 22 or 32 of a catalyst capable of selectively oxidizing carbon monoxide in the presence of gaseous oxygen is contained in the internal chamber of the respective container 21 or 31, being shown to be supported on a perforated or otherwise gas-permeable support member 23 or 33 which facilitates the distribution of the gaseous fuel to all regions of the respective catalyst bed 22 or 32 and makes it as uniform as possible. The catalyst contained in the beds 22 and 32 is of the type known to be highly selective for carbon monoxide. Examples of such catalysts are listed in the article mentioned above. Currently, it is preferred to use alumina supported platinum, by itself or in combination with other trace elements, for the selective catalyst of the catalyst beds 22 and 32.

Gaseous oxygen, the presence of which is needed for the performance of the selective oxidizing reaction in the two catalyst beds 22 and 32, is indicated to be admixed, either as such or as a component of air or a similar oxygen-carrying gas, to the gaseous fuel flowing in the conduit 17, in a mixing device 19. However, it is to be understood that such oxygen or oxygen-carrying gas could be introduced instead directly into the container 21 and/or 31 either only upstream of the catalyst bed 22 and/or 32 or additionally into the bed 22 and/or 32 itself.

A cooling coil 24 or 34 is shown to be embedded in the respective catalyst bed 22 or 32, being supplied with a coolant through a respective coolant supply conduit 25 or 35, with the coolant being discharged from the respective cooling coil 24 and 34 after passing therethrough via a respective spent coolant discharge conduit 26 or 36. The rate of flow of the fresh coolant into the respective cooling coil 24 or 34 is controlled by a respective coolant flow control valve 27 and 37. Similarly, a coolant is admitted into the heat exchanger 40, which is of any well-known construction, through a coolant supply conduit 41, and is discharged therefrom through a discharge conduit 42, with the rate of flow of the coolant through the heat exchanger 40 being controlled by a flow control valve 43.

The operation of the selective oxidizing apparatus 10 and particularly of the valves 27, 37 and 43 is controlled by a control device 50 which again is of any known construction and usually includes a computer or a part of a computer that controls the operation of the fuel cell 12 and/or the gaseous fuel source 11, and appropriate software. The control device 50 is intended to control the valves 27, 37 and 43 in such a manner that the selective oxidizing process, which is exothermic by nature, takes place in the respective catalyst beds 22 and 32 under well defined temperature conditions that will be explained later. To be able to do this, the control device 50 is furnished with information from respective temperature measuring devices 51 and 52, through respective connecting lines 53 and 54, about the temperatures of the gaseous fuel after it has left the first stage 20 and the second stage 30, respectively, of the selective oxidizing apparatus 10. Based on this information, the control device 50 then issues control commands that are furnished to the respective valves 27, 37 and 43 through respective control lines 55, 56 and 57 to thereby control the rate of flow of the coolant through the respective valves 27, 37 and 43 in the senses resulting in the temperatures sensed by the temperature measuring devices 51 and 52 approaching or reaching the desired values.

Control algorithms capable of accomplishing this purpose are of the well known type so that they need not be described in detail here. Suffice it to say that, in accordance with the present invention, the cooling of, that is the removal of the exothermic oxidizing reaction heat from, the first stage catalyst bed 22 is controlled via the valve 27 in such a manner that the temperatures existing in the first catalyst bed 22 are consistently above a threshold temperature below which the catalyst would be rapidly rendered ineffective when exposed to the high concentration of carbon monoxide contained in the gaseous fuel treated as it enters the first catalyst bed 22. This threshold temperature is about 220°F (104°C). However, it has been found to be advantageous to conduct the oxidizing operation in the first catalyst bed 22 at temperatures that are considerably higher than the threshold temperature, such as at about 320°F (160°C).

As mentioned before, at these relatively high temperatures, the catalyst is not rendered ineffective by the carbon monoxide despite its high concentration; yet, as has been found out before, it is impossible for the carbon monoxide concentration to be reduced to less than about 60 ppm during its passage through the first catalyst bed 22 regardless of its size when the oxidizing operation is conducted at temperatures above the threshold temperatures throughout, without removing the product carbon dioxide from the gaseous fuel stream as proposed in the aforementioned article.

Yet, quite surprisingly, it has been established that there is no need for such carbon dioxide removal when, in accordance with the present invention, the temperatures at which the selective oxidation reaction takes place in the second stage catalyst bed 32 are maintained below the threshold temperature but still within the temperature range within which the catalyst is effective to promote or achieve the selective or preferential oxidation of carbon monoxide. Moreover, and even more importantly, it has been found out that, when this expedient is resorted to, the carbon monoxide concentration in the gaseous fuel as it leaves the second catalyst bed 32 is reduced to a significantly lower level than that achievable by using the approach disclosed in the above article, such as to 6 ppm or even less.

In view or this, the control device 50 is made operative for maintaining the temperatures throughout the second catalyst bed 32 below such threshold temperature. This is achieved, in the illustrated apparatus 10, by cooling the gaseous fuel in the heat exchanger 40 to below the threshold temperature prior to its admission into the second stage 30 and, furthermore, by cooling the second catalyst bed 32 by a coolant flowing through the cooling coil 34 under the control of the valve 37 to remove additional heat resulting from the exothermic oxidation reaction from the second catalyst bed 32. It came as quite a surprise that, despite the propensity of the catalyst for being rendered ineffective by the carbon monoxide at temperatures below the threshold value, this did not occur in the second catalyst bed 32. A possible explanation for this rather unexpected result is that the concentration of the carbon monoxide in the gaseous fuel entering the second catalyst bed 32 is already so low, after the bulk of the carbon monoxide has been removed in the first catalyst bed 22, that the remaining carbon monoxide is incapable of rendering the catalyst of the second bed 32 ineffective, at least at any other than a negligible rate.

Even though the construction of the selective oxidation apparatus described above is considered to be particularly advantageous, it is also contemplated by the present invention to conduct the above two-stage selective oxidizing operation without intervening cooling of the gaseous medium between the stages 20 and 30. As a matter of fact, it is also proposed to for the two-stage oxidation process to be performed in a single bed, in which case the function of the first catalyst bed 22 would be performed by an inlet portion of the single catalyst bed at temperatures above the threshold temperature, and that of the second catalyst bed 32 by an outlet portion of such single catalyst bed at temperatures below the threshold temperature. In this scenario, there could be either an abrupt temperature drop between the inlet and outlet portions, or a gradual temperature decrease from above to below the threshold temperature in the direction of flow of the gaseous medium through the single catalyst bed.

Furthermore, even though the selective carbon monoxide oxidation apparatus 10 has been shown as having the catalyst located outside the respective coils 24 and 34 in the form of respective beds 32 and 34, it is to be understood that the situation can be reversed if found advantageous, that is, the required catalyst quantity could be accommodated inside the coils 24 and 34 as either inlet and outlet portions of such quantity or continuous catalyst bed, or as respective separate catalyst beds, and the cooling medium could then be situated as respective cooling medium baths all around the convolutions of the coils 24 and 34. Under these circumstances, the conduits 25, 35, 26 and 36 would obviously communicate with the respective cooling medium baths, and the valves 27 and 37 would be used to control the admission of fresh (cool) cooling medium into the respective baths so as to control the desired temperatures thereof. This approach, however, does not readily lend itself to the achievement of gradual temperature diminution in the catalyst quantity in the direction from its inlet portion to its outlet portion.

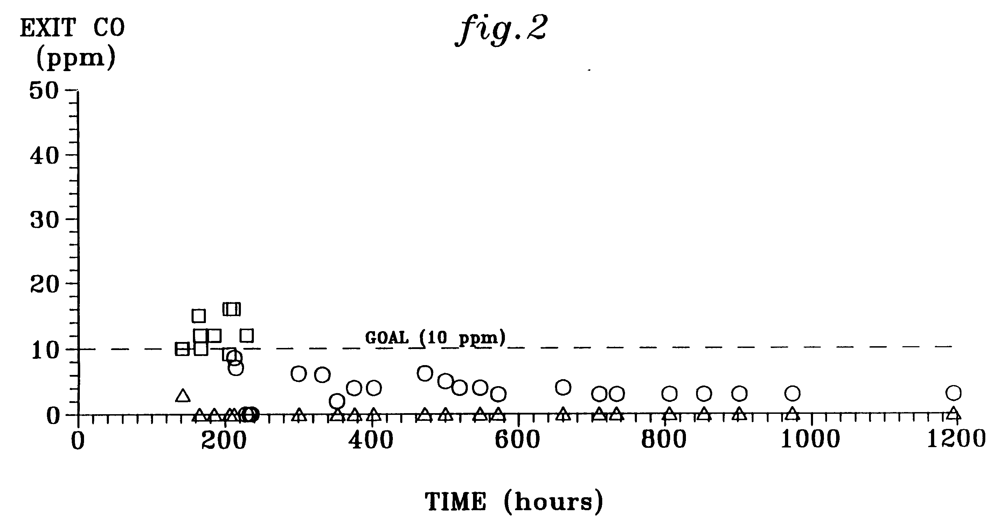

Turning now to Figure 2 of the drawing, it may be seen that it shows certain test results obtained by using an experimental selective carbon monoxide oxidation apparatus employing the principles of the present invention but constructed as an implementation of the last-mentioned approach in two separate consecutive stages of which the first is maintained at above, and the second at below, the threshold temperature of 220°F (104°C). To achieve consistent and comparable results, a gaseous medium of a known and constant composition (by volume, 1% carbon monoxide, 29% carbon dioxide, and the remainder hydrogen) to which there was added 1.35% by volume oxygen (resulting in 2.7 times the stoichiometric ratio of oxygen to carbon monoxide) was used throughout such tests. Of the 1.35% oxygen, the 1% was added to the gaseous medium prior to the first stage, and the remaining .35% prior to the second stage. Such tests were conducted at different volumetric hourly space velocities (VHSV), which term is defined as cubic feet per hour of the gaseous medium per cubic foot of catalyst; yet, for the sake of simplicity, each VHSV will be expressed below merely in units of "per hour" (h⁻¹).

It may be seen by observation of Figure 2 that, when the tests were run using one VHSV (4500 h⁻¹), the carbon monoxide concentrations measured downstream of the second stage (indicated by circles in Figure 2) were consistently below the desired upper limit of 10 ppm, and often below 5 ppm. There is also an apparent tendency for such concentrations to decrease with increasing time of operation of the apparatus, boding well for the operational longevity of such selective oxidizing apparatus. On the other hand, when another test was run at a lower VHSV (3000 h⁻¹ in this instance), as indicated by squares in Figure 2, none of the carbon monoxide measurement results came below the desired upper limit, so that this particular test was terminated after only a relatively short period of time.

Moreover, another set of intermediate carbon monoxide concentration measurements was taken within (in about the middle of) the second stage during the performance of both tests. The results of such measurements (indicated by triangles in Figure 2) were consistently below those obtained at or downstream of the second stage exit and, as a matter of fact, so low that it was impossible to obtain accurate indications given the limited sensitivity of the measuring device. Conclusions that were drawn from the comparison of such test results are that some backshifting from carbon dioxide to carbon monoxide takes place due to reaction of carbon dioxide with hydrogen in the second stage downstream of the location at which the intermediate measurements were taken, and that the degree of such backshifting increases with decreasing VHSV. This limited amount of carbon monoxide regeneration may be acceptable in many cases, so long as it is assured that the carbon monoxide concentration in the exiting gaseous medium is still below the desirable upper limit.

Now, at least when the oxidizing apparatus employing the approach presented above is to be used to rid fuel gas being supplied to a fuel cell device of carbon monoxide, it has to be designed in such a manner as to be able to treat all of such fuel gas that is needed during the operation of the fuel cell device at rated or peak performance (or electric power output) level. This means that the amount of catalyst present in the oxidizing apparatus must be high enough with respect to the volumetric rate of flow of the fuel gas demanded by the fuel cell device at this performance level as to achieve a VHSV high enough to avoid unacceptably high level of back formation of carbon monoxide in the downstream portion of the second catalyst stage. To do less would result in a situation where the fuel gas would leave the catalyst quantity before completion of the oxidizing reaction; to do more would mean increased back formation of carbon monoxide in the downstream portion of at least the second catalyst stage.

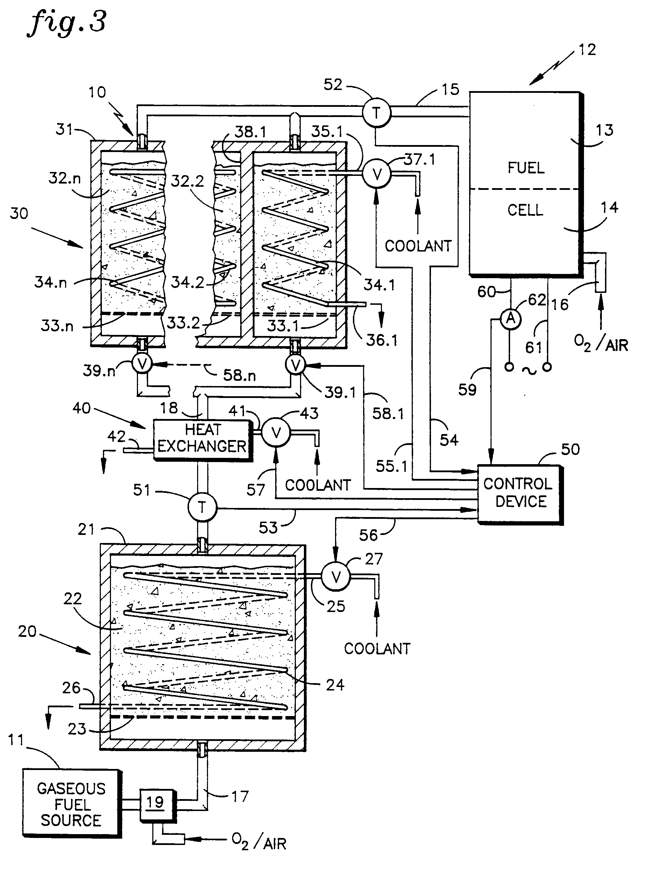

In many instances, though, the electric power demand on the fuel cell device varies over time, sometimes amounting to as little as 20% of the rated power or even less, which means that the amount of the fuel gas being supplied to the fuel cell device has to be adjusted accordingly. It is with this in mind, and based on the above realizations, that the method and apparatus of the present invention have been further modified in the manner that will be discussed below in connection with Figure 3 of the drawing in which the same reference numerals as before have been used to identify corresponding parts that are arranged and function in the manner explained above so that they need not and will not be discussed in detail.

Here again, the selective oxidation apparatus 10 is shown to include two consecutive stages 20 and 30. However, this time the internal chamber of the container 31 is subdivided, by respective partitioning walls such as 38.1, into individual compartments, and the connecting conduit 18 is furcated downstream of the heat exchanger 40 into a plurality of individual connecting conduit branches each communicating with one of such compartments. Similarly, the discharge conduit 15 has the same number of discharge conduit branches each for discharging the gaseous medium from a different one of the compartments into a common portion of the conduit 15. Respective remotely controllable on/off or control valves 39.1 to 31.n (where n is the number of the compartments and of the components associated therewith) are interposed in the respective connecting conduit branches.

Respective beds 32.1 to 32.n of a catalyst capable of selectively oxidizing carbon monoxide in the presence of gaseous oxygen are contained in the internal compartments of the container 31, being shown to be supported on respective perforated or otherwise gas-permeable support members 33.1 to 33.n which facilitate the distribution of the gaseous fuel to all regions of the respective catalyst bed 32.1 to 32.n and makes it as uniform as possible. The catalyst contained in the beds 32.1 to 32.n is once more of the type known to be highly selective for carbon monoxide and may be the same as that present in the bed 22. At least a part of the gaseous oxygen needed for the performance of the selective oxidizing reaction in the catalyst beds 32.1 to 32.n, may again be introduced directly into the container 31 either only upstream of the catalyst beds 32.1 to 32.n or additionally into the respective bed 32.1 to 32.n itself.

Cooling coils 34.1 to 34.n are shown to be embedded in the respective catalyst beds 32.1 to 32.n, being supplied with a coolant through respective coolant supply conduits 35.1 to 35.n, with the coolant being discharged from the respective cooling coil 34.1 to 34.n after passing therethrough via a respective spent coolant discharge conduit 36.1 to 36.n. The rate of flow of the fresh coolant into the respective cooling coil 34.1 to 34.n is controlled by a respective coolant flow control valve 37.1 to 37.n.

The control device 50, which is of the character described above but appropriately modified in construction and operation to take the changed circumstances into account, controls the operation of the valves 39.1 to 39.n and of valves 39.1 to 39.n, as well. Based on the information derived from the temperature measuring devices 51 and 52, it issues additional control signals to control lines 55.1 to 55.n to control the rate of flow of the coolant through the respective valves 37.1 to 37.n in the senses resulting in the temperatures sensed by the temperature measuring device 52 approaching or reaching the desired value. The control device 50 is also operative for controlling the displacement or switching of the control valves 39.1 to 39.n between their open and closed positions, by issuing appropriate control signals that are transmitted to the control valves 39.1 to 39.n via individual control lines 58.1 to 58.n.

As also shown, the control device 50 is further furnished with information about the load conditions to be met or existing at any particular time of operation of the fuel cell device 12 and thus of the oxidizing apparatus 10 and the gaseous fuel source 11. This information is supplied to the control device 50 via a line 59 from an amperemeter 62 that is interposed in the terminal line 60 and measures the amount of electric current flowing through such terminal line 60, as an electric signal indicative of such measured value. This electric signal is also indicative of (and typically used to control) the rate of generation of the gaseous fuel in the gaseous fuel source 11, and thus the volumetric flow rate of such fuel out of the source 11 and through the oxidizing apparatus 10 to the fuel cell device to satisfy the demand therefor.

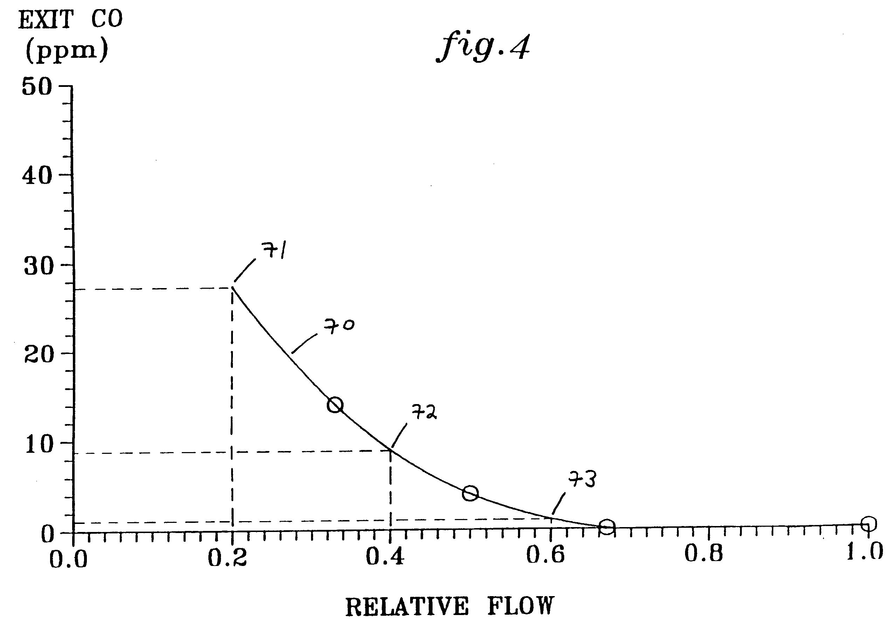

Now that the construction of the modified carbon monoxide oxidizing apparatus 10 of the present invention and the environment in which it is used to advantage has been described, it is time to discuss the operation of such modified apparatus 10 in some detail still in the context of Figure 3 but as considered in conjunction with Figure 4 of the drawing.

A curve 70 appearing in Figure 4 is representative of the dependence of the carbon monoxide concentration at the exit of the apparatus 10 on the relative flow rate (VHSV) of the gaseous fuel therethrough, wherein the value of 1 on the relative flow rate scale is indicative of the design or maximum expected flow rate conditions that are not to be exceeded, or only insignificantly so, lest the oxidizing reaction fall short of completion with attendant increase in the carbon monoxide concentration. Now, let us assume that, a particular point in time, the fuel cell device 12 is to be operated at only 20 percent of its capacity, so that the flow rate of the gaseous fuel is decreased correspondingly. If this amount of fuel were permitted to flow through all of the compartments (catalyst beds 32.1 to 32.n), the conditions encountered at point 71 of the curve 70 would prevail, that is, the exiting gaseous fuel would have carbon monoxide concentration in excess of 25 ppm, which is an unacceptably high level.

Let us assume further that n amounts to 6, that is, that there are 6 separate partial beds 32.1 to 32.6 in the second stage 30; then, elimination of three such beds 32.1 to 32.6, such as 32.4 to 32.6, from the path of flow of the gaseous fuel through the oxidizing apparatus 10, which is achieved by the control device 50 causing the complete closure of the control valves 39.4 to 39.6 while the control valves 39.1 to 39.3 remain fully open, doubles the rate of flow of the gaseous fuel through the remaining partial beds 32.1 to 32.3, bringing the conditions to point 72 on the curve 70. It may be seen that, under these conditions (at this VHSV), the exit carbon monoxide concentration is at just about the still acceptable upper limit. If, however, another one of the partial beds 31.1 to 31.3, say 31.2, is taken out of operation by the control device 50 closing the control valve 39.2, the VHSV through the remaining two partial beds 32.1 and 32.3 corresponds to point 73 on the curve 70 at which the carbon monoxide concentration in the gaseous fuel leaving the apparatus 10 is at an almost negligible level. While 6 has been used for convenience as the value of n, there is normally no need for n to exceed 2 or 3.

It goes without saying that the additional modifications and structural changes mentioned above in conjunction with Figure 1 can be adopted or made in the apparatus depicted in Figure 4 as well. In addition, rather than compartmentalizing only the second stage 30, the first stage 20 could be similarly subdivided as well, in which the split into parallel branches with individual control of the flow therethrough would take place in front of the first stage 20, with individual connecting conduits then connecting the corresponding compartments of the first and second stages 20 and 30.

While the present invention has been illustrated and described as embodied in particular constructions of a selective oxidizing apparatus for use in carbon monoxide removal from a gaseous fuel being supplied to a fuel cell under varying load conditions, it will be appreciated that the present invention is not limited to this particular example; rather, the scope of protection of the present invention is to be determined solely from the attached claims.

## Claims

1. A method of reducing to a desired minimum level the concentration of carbon monoxide in a gaseous medium that also contains at least hydrogen, by selective catalytic oxidation in the presence of gaseous oxygen using a catalyst which is capable of oxidizing carbon monoxide in an exothermic reaction at a temperature within a given temperature range, but is rapidly inactivated when exposed to high carbon monoxide concentrations at less than a threshold temperature within the given temperature range, and incapable of reducing the carbon monoxide concentration to the desired minimum level when exposed to carbon monoxide at above the threshold temperature, comprising the steps of
confining a quantity of the catalyst to form an inlet portion (22) and an outlet portion (32) of the catalyst quantity;
passing the gaseous medium through the confined catalyst quantity from the inlet portion (22) to the outlet portion (32) thereof;
introducing gaseous oxygen into at least the inlet portion (22) of the confined catalyst quantity; and controlling the temperatures encountered in the confined catalyst quantity in such a manner that the exothermic reaction takes place at above, and at below, the threshold temperature in the inlet portion and the outlet portion, respectively.

2. The method as defined in claim 1, wherein the threshold temperature is about 220°F (104°C) and the temperatures encountered in the inlet portion are in excess of about 320°F (160°C).

3. The method as defined in claim 1 or 2, wherein said confining step includes forming at least two separate catalyst beds one constituting the inlet portion (22) and the other the outlet portion (32) of the confined catalyst quantity; and wherein said controlling step includes cooling the gaseous medium after leaving the one catalyst bed and before entering the other catalyst bed.

4. The method as defined in claim 1, 2 or 3, wherein said controlling step includes removing heat resulting from the exothermic reaction from the confined catalyst quantity at rates sufficient to maintain the temperatures encountered in the inlet and outlet portions at above, and at below, the threshold temperature, respectively.

5. The method as defined in any preceding claim, wherein said introducing step includes adding the gaseous oxygen to the gaseous medium at least prior to performance of said passing step.

6. The method as defined in any preceding claim, further comprising the steps of:
subdividing at least the outlet portion of the confined catalyst quantity into a plurality of separate catalyst beds (32.n);
determining the amount of the gaseous medium to be treated at a particular time; and
passing the gaseous medium through the confined catalyst quantity from the inlet portion to the outlet portion thereof in such a manner that said thus determined amount of the gaseous medium is directed through only as many addressed ones of the separate catalyst beds as required to achieve a flow rate of the gaseous medium therethrough that is sufficiently high to avoid any significant reverse shift of carbon dioxide to carbon monoxide due to reaction with hydrogen at least in the respective addressed bed of the outlet portion.

7. The method as defined in claim 6, wherein said confining step includes forming at least one first catalyst bed constituting the inlet portion, and a plurality of second catalyst beds separate from each other and from the first catalyst bed and collectively constituting the outlet portion of the confined catalyst quantity; and wherein said directing step takes place downstream of the first catalyst bed and upstream of the second catalyst beds.

8. An apparatus for reducing to a desired minimum level the concentration of carbon monoxide in a gaseous medium that also contains at least hydrogen, by selective catalytic oxidation in the presence of gaseous oxygen using a catalyst which is capable of oxidizing carbon monoxide in an exothermic reaction at temperatures within a given temperature range, but is rapidly inactivated when exposed to high carbon monoxide concentrations at less than a threshold temperature within the given temperature range, and incapable of reducing the carbon monoxide concentration to the minimum level when exposed to carbon monoxide at above the threshold temperature, consisting essentially of
means (21,31) for confining a quantity of the catalyst to form an inlet portion (22) and an outlet portion (32) of said catalyst quantity;
means (17,18) for passing the gaseous medium through said confined catalyst quantity from said inlet portion (22) to said outlet portion (32) thereof;
means (19) for introducing gaseous oxygen into at least said inlet portion of said confined catalyst quantity; and
means (50) for controlling the temperatures encountered in said confined catalyst quantity in such a manner that the exothermic reaction takes place at above, and at below, the threshold temperature in said inlet portion and said outlet portion, respectively.

9. The apparatus as defined in claim 8, wherein the threshold temperature is about 220°F (104°C) and the temperatures encountered in said inlet portion are in excess of about 320°F (160°C).

10. The apparatus as defined in claim 8 or 9, wherein said confining means includes means for forming at least two separate catalyst beds one constituting said inlet portion (22) and the other said outlet portion (32) of said confined catalyst quantity; and wherein said controlling means includes means (40) for cooling the gaseous medium after leaving said one catalyst bed and before entering said other catalyst bed.

11. The apparatus as defined in claim 8, 9 or 10, wherein said controlling means includes means (24,34) for removing heat resulting from the exothermic reaction from said confined catalyst quantity at rates sufficient to maintain the temperatures encountered in said inlet and outlet portions at above, and at below, the threshold temperature, respectively.

12. The apparatus as defined in claim 8, 9, 10 or 11, wherein said introducing means (19) includes means for adding the gaseous oxygen to the gaseous medium at least prior to the admission thereof into said inlet portion.

13. An apparatus as claimed in any one of claims 8 to 12, further comprising:
means (38.n) for subdividing at least said outlet portion of said confined catalyst quantity into a plurality of separate catalyst beds (32.n);
means (62) for determining the amount of the gaseous medium to be treated at a particular time; and wherein said
means for passing the gaseous medium through said confined catalyst quantity from said inlet portion to said outlet portion thereof includes means (39.n) for directing the thus determined amount of the gaseous medium to flow through only as many addressed ones of said separate catalyst beds as required to achieve a flow rate of the gaseous medium therethrough that is sufficiently high to avoid any significant reverse shift of carbon dioxide to carbon monoxide, due to reaction with hydrogen, at least in the respective addressed bed of said outlet portion.

14. The apparatus as defined in claim 13, wherein said confining means includes means for forming at least one first catalyst bed constituting the inlet portion, and a plurality of second catalyst beds separate from each other and from said first catalyst bed and collectively constituting said outlet portion of said confined catalyst quantity; and wherein said directing means is interposed between said first catalyst bed and said second catalyst beds.

## Patentansprüche

1. Verfahren zur Reduzierung der Kohlenmonoxidkonzentration in einem auch wenigstens Wasserstoff enthaltenden gasförmigen Medium auf ein gewünschtes Mindestniveau durch selektive katalytische Oxidation in Anwesenheit von gasförmigem Sauerstoff unter Verwendung eines Katalysators, welcher in der Lage ist, Kohlenmonoxid in einer exothermen Reaktion bei einer Temperatur innerhalb eines gegebenen Temperaturbereichs zu oxidieren, der aber schnell inaktiviert wird, wenn erhohen Kohlenmonoxidkonzentrationen unter einer Schwellentemperatur innerhalb des gegebenen Temperaturbereichs ausgesetzt wird und unfähig ist, die Kohlenmonoxidkonzentration auf das gewünschte Mindesniveau zu reduzieren, wenn er dem Kohlenmonoxid über der Schwellentemperatur ausgesetzt ist, umfassend die Schritte:
Einschließen einer Menge des Katalysators, um einen Einlaßabschnitt (22) und einen Auslaßabschnitt (32) der Katalysatormenge auszubilden;
Leiten des gasförmigen Mediums durch die eingeschlossene Katalysatormenge von dem Einlaßabschnitt (22) zu dessen Auslaßabschnitt (32); Einleiten von gasförmigem Sauerstoff in wenigstens den Einlaßabschnitt (22) der eingeschlossenen Katalysatormenge; und
Steuern der in der eingeschlossenen Katalysatormenge auftretenden Temperaturen, derart, daß die exotherme Reaktion im Einlaßabschnitt über der Schwellentemperatur und im Auslaßabschnitt unter der Schwellentemperatur stattfindet.

2. Verfahren nach Anspruch 1, wobei die Schwellentemperatur etwa 220 °F (104 °C) beträgt und die in dem Einlaßabschnitt auftretenden Temperaturen über etwa 320 °F (160 °C) liegen.

3. Verfahren nach Anspruch 1 oder 2, wobei der Einschließungsschritt das Ausbilden von wenigstens zwei separaten Katalysatorbetten umfaßt, wobei das eine den Einlaßabschnitt (22) und das andere den Auslaßabschnitt (32) der eingeschlossenen Katalysatormenge bildet; und wobei der Steuerschritt das Kühlen des gasförmigen Mediums nach dem Verlassen des einen Katalysatorbetts und vor dem Eintreten in das andere Katalysatorbett umfaßt.

4. Verfahren nach Anspruch 1, 2 oder 3, wobei der Steuerschritt das Entfernen der Wärme umfaßt, die aus der exothermen Reaktion von der eingeschlossenen Katalysatormenge resultiert, mit Geschwindigkeiten, die ausreichen, um die in den Einlaß- und Auslaßabschnitten auftretenden Temperaturen über bzw. unter der Schwellentemperatur zu halten.

5. Verfahren nach einem der vorhergehenden Ansprüche, wobei der Einleitungsschritt das Zuführen des gasförmigen Sauerstoffs zum gasförmigen Medium wenigstens vor der Durchführung des Leitungsschritts umfaßt.

6. Verfahren nach einem der vorhergehenden Ansprüche, ferner umfassend die Schritte:
Unterteilen wenigstens des Auslaßabschnitts der eingeschlossenen Katalysatormenge in eine Mehrzahl separater Katalysatorbetten (32.n);
Bestimmen der Menge des an einem speziellen Zeitpunkt zu behandelnden gasförmigen Mediums; und
Leiten des gasförmigen Mediums durch die eingeschlossene Katalysatormenge von dem Einlaßabschnitt zu dessen Auslaßabschnitt auf eine solche Art, daß die so bestimmte Menge des gasförmigen Mediums nur durch so viele adressierte der separaten Katalysatorbetten wie benötigt dirigiert wird, um eine Durchströmungsgeschwindigkeit des gasförmigen Mediums zu erreichen, die ausreichend hoch ist, um wenigstens in dem jeweiligen adressierten Bett des Auslaßabschnitts infolge der Reaktion mit Wasserstoff eine signifikante Umkehrreaktion des Kohlendioxids zu Kohlenmonoxid, zu vermeiden.

7. Verfahren nach Anspruch 6, wobei der Einschließungsschritt das Ausbilden wenigstens eines ersten Katalysatorbetts umfaßt, das den Einlaßabschnitt bildet und einer Mehrzahl von zweiten Katalysatorbetten, die voneinander und von dem ersten Katalysatorbett getrennt sind und zusammen den Auslaßabschnitt der eingeschlossenen Katalysatormenge bilden; und wobei der Dirigierungsschritt stromabwärts des ersten Katalysatorbetts und stromaufwärts der zweiten Katalysatorbetten stattfindet.

8. Vorrichtung zur Reduzierung der Kohlenmonoxidkonzentration in einem auch wenigstens Wasserstoff enthaltenden gasförmigem Medium durch die selektive katalytische Oxidation in Anwesenheit von gasförmigem Sauerstoff auf ein gewünschtes Mindestniveau, indem ein Katalysator verwendet wird, der in der Lage ist, Kohlenmonoxid in einer exothermen Reaktion bei Temperaturen innerhalb eines gegebenen Temperaturbereichs zu oxidieren, der aber schnell inaktiviert wird, wenn er hohen Kohlenmonoxidkonzentrationen unter einer Schwellentemperatur innerhalb des gegebenen Temperaturbereichs ausgesetzt wird und unfähig wird, die Kohlenmonoxidkonzentration auf das Mindestniveau zu reduzieren, wenn er dem Kohlenmonoxid über der Schwellentemperatur ausgesetzt ist, im wesentlichen bestehend aus:
Mitteln (21, 31) zum Einschließen einer Menge des Katalysators, um einen Einlaßabschnitt (22) und einen Auslaßabschnitt (32) der Katalysatormenge zu bilden;
Mitteln (17, 18) zum Leiten des gasförmigen Mediums durch die eingeschlossene Katalysatormenge von dem Einlaßabschnitt (22) zu dessen Auslaßabschnitt (32);
Mitteln (19) zum Einleiten von gasförmigem Sauerstoff in wenigstens den Einlaßabschnitt der eingeschlossenen Katalysatormenge; und Mitteln (50) zur Steuerung der in der eingeschlossenen Katalysatormenge auftretenden Temperaturen, derart, daß die exotherme Reaktion über der Schwellentemperatur im Einlaßabschnitt und unter der Schwellentemperatur im Auslaßabschnitt stattfindet.

9. Vorrichtung nach Anspruch 8, wobei die Schwellentemperatur etwa 220 °F (104 °C) beträgt und die in dem Einlaßabschnitt auftretenden Temperaturen über etwa 320 °F (160 °C) liegen.

10. Vorrichtung nach Anspruch 8 oder 9, wobei die Einschließungsmittel Mittel umfassen, um wenigstens zwei getrennte Katalysatorbetten auszubilden, wobei eines den Einlaßabschnitt (22) und das andere den Auslaßabschnitt (32) der eingeschlossenen Katalysatormenge ausbildet; und wobei die Steuermittel Mittel (40) umfassen, um das gasförmige Medium nach dem Verlassen des einen Katalysatorbetts und vor dem Einströmen in das andere Katalysatorbett zu kühlen.

11. Vorrichtung nach Anspruch 8, 9 oder 10, wobei die Steuermittel Mittel (24, 34) umfassen, um die aus der exothermen Reaktion von der eingeschlossenen Katalysatormenge herstammende Wärme mit einer Geschwindigkeit zu entfernen, die ausreicht, um die Temperaturen, die in den Einlaß- und Auslaßabschnitten auftreten, über bzw. unter der Schwellentemperatur zu halten.

12. Vorrichtung nach Anspruch 8, 9, 10 oder 11, wobei die Einleitemittel (19) Mittel umfassen, um dem gasförmigem Medium wenigstens vor dessen Eintritt in den Einlaßabschnitt den gasförmigen Sauerstoff zuzusetzen.

13. Vorrichtung nach einem der Ansprüche 8 bis 12 ferner umfassend:
Mittel (38.n) zum Unterteilen wenigstens des Auslaßabschnitts der eingeschlossenen Katalysatormenge in eine Mehrzahl getrennter Katalysatorbetten (32.n);
Mittel (62) zum Bestimmen der Menge des zu einem bestimmten Zeitpunkt zu behandelnden gasförmigen Mediums; und wobei das Mittel zum Leiten des gasförmigen Mediums durch die eingeschlossene Katalysatormenge von dem Einlaßabschnitt zu dessen Auslaßabschnitt Mittel (39.n) zum Leiten der so bestimmten Menge des gasförmigen Mediums umfaßt, um nur durch soviele adressierte der separaten Katalysatorbetten wie benötigt zu strömen, um eine Hindurchströmungsgeschwindigkeit des gasförmigen Mediums zu erreichen, die ausreichend hoch ist, um wenigstens in dem jeweiligen adressierten Bett des Auslaßabschnitts wegen der Reaktion mit Wasserstoff eine signifikante Umkehrreaktion des Kohlendioxids zu Kohlenmonoxid zu verhindern.

14. Vorrichtung nach Anspruch 13, wobei die Begrenzungsmittel Mittel umfassen, um wenigstens ein erstes Katalysatorbett auszubilden, das den Einlaßabschnitt bildet und eine Mehrzahl von zweiten Katalysatorbetten, die voneinander und von dem ersten Katalysatorbett getrennt sind und zusammen den Auslaßabschnitt der eingeschlossenen Katalysatormenge bilden; und wobei das Leitungsmittel zwischen dem ersten Katalysatorbett und dem zweiten Katalysatorbetten zwischengeschaltet ist.

## Revendications

1. Procédé de réduction à un niveau minimum désiré, de la concentration de monoxyde de carbone dans un milieu gazeux qui contient également au moins de l'hydrogène, par oxydation catalytique sélective en présence d'oxygène gazeux, utilisant un catalyseur qui est capable d'oxyder le monoxyde de carbone dans une réaction exothermique à une température comprise dans une gamme de températures donnée, mais est rapidement inactivé quand il est exposé à de hautes concentrations de monoxyde de carbone à moins qu'une température de seuil à l'intérieur de la gamme de températures donnée, et incapable de réduire la concentration de monoxyde de carbone au niveau minimum désiré quand il est exposé à du monoxyde de carbone au-dessus de la température de seuil, comprenant les étapes de
confinement d'une quantité du catalyseur pour former une partie d'entrée (22) et une partie de sortie (32) de la quantité de catalyseur ;
passage du milieu gazeux à travers la quantité de catalyseur confinée depuis la partie d'entrée (22) vers la partie de sortie (32) de celle-ci ;
introduction de l'oxygène gazeux dans au moins la partie d'entrée (22) de la quantité de catalyseur confinée ; et commande des températures rencontrées dans la quantité de catalyseur confinée de telle manière que la réaction exothermique prenne place au-dessus, et au-dessous, de la température de seuil dans la partie d'entrée et la partie de sortie, respectivement.

2. Procédé selon la revendication 1, dans lequel la température de seuil est d'environ 104°C (220°F) et les températures rencontrées dans la partie d'entrée sont en plus d'environ 160°C (320°F).

3. Procédé selon la revendication 1 ou 2, dans lequel ladite étape de confinement inclut la formation d'au moins deux lits de catalyseur séparés, l'un constituant la partie d'entrée (22) et l'autre la partie de sortie (32) de la quantité de catalyseur confinée ; et dans lequel ladite étape de commande inclut le refroidissement du milieu gazeux après la sortie du premier lit de catalyseur et avant l'entrée à l'autre lit de catalyseur.

4. Procédé selon la revendication 1, 2 ou 3, dans lequel ladite étape de commande comporte l'évacuation de la chaleur résultant de la réaction exothermique de la quantité de catalyseur confinée à des cadences suffisantes pour maintenir les températures rencontrées dans les parties d'entrée et de sortie au-dessus et au-dessous de la température de seuil, respectivement.

5. Procédé selon l'une quelconque des revendications précédentes, dans lequel ladite étape d'introduction comporte l'addition d'oxygène gazeux au milieu gazeux au moins avant d'accomplir ladite étape de passage.

6. Procédé selon l'une quelconque des revendications précédentes, comprenant en outre les étapes de :
subdivision d'au moins la partie de sortie de la quantité de catalyseur confinée en plusieurs lits de catalyseur séparés (32.n) ;
détermination de la quantité du milieu gazeux à traiter à un moment particulier ; et
passage du milieu gazeux à travers la quantité de catalyseur confinée depuis la partie d'entrée vers la partie de sortie de telle manière que ladite quantité ainsi déterminée de milieu gazeux soit dirigée à travers seulement autant qu'il y a de lits de catalyseur séparés qui sont adressés comme cela est requis pour obtenir un débit d'écoulement du milieu gazeux suffisamment élevé pour éviter toute inversion significative de dioxyde de carbone à monoxyde de carbone due à une réaction avec l'hydrogène au moins dans le lit adressé respectif de la partie de sortie.

7. Procédé selon la revendication 6, dans lequel ladite étape de confinement comporte la formation d'au moins un premier lit de catalyseur constituant la partie d'entrée, et plusieurs deuxièmes lits de catalyseur séparés l'un de l'autre et du premier lit de catalyseur et constituant collectivement la partie de sortie de la quantité de catalyseur confinée ; et dans lequel ladite étape pour diriger prend place vers l'aval du premier lit de catalyseur et vers l'amont du deuxième lit de catalyseur.

8. Appareil pour réduire à un niveau minimum désiré la concentration de monoxyde de carbone dans un milieu gazeux qui contient en outre au moins de l'hydrogène, par oxydation catalytique sélective en présence d'oxygène gazeux en utilisant un catalyseur qui est capable d'oxyder du monoxyde de carbone dans une réaction exothermique à des températures comprises à l'intérieur d'une gamme de températures donnée, mais est rapidement inactivé quand il est exposé à de hautes concentrations de monoxyde de carbone à moins qu'une température de seuil à l'intérieur de la gamme de températures donnée, et incapable de réduire la concentration en monoxyde de carbone au niveau minimum quand il est exposé à du monoxyde de carbone au-dessus de la température de seuil, consistant essentiellement en
des moyens (21, 31) de confinement d'une quantité du catalyseur pour former une partie d'entrée (22) et une partie de sortie (32) de ladite quantité de catalyseur ;
des moyens (17, 18) de passage du milieu gazeux à travers ladite quantité de catalyseur confinée depuis ladite partie d'entrée (22) vers ladite partie de sortie (32) de celui-ci ;
des moyens (19) d'introduction de l'oxygène gazeux dans au moins ladite partie d'entrée de ladite quantité de catalyseur confinée ; et
des moyens (50) de commande des températures rencontrées dans ladite quantité de catalyseur confinée de telle manière que la réaction exothermique prenne place au-dessus, et au-dessous, de la température de seuil dans ladite partie d'entrée et ladite partie de sortie, respectivement.

9. Appareil selon la revendication 8, dans lequel la température de seuil est d'environ 104°C (220°F) et les températures rencontrées dans ladite partie d'entrée sont en plus de 160°C (320°F).

10. Appareil selon la revendication 8 ou 9, dans lequel lesdits moyens de confinement comportent des moyens pour former au moins deux lits de catalyseur séparés, l'un constituant ladite partie d'entrée (22) et l'autre ladite partie de sortie (32) de ladite quantité de catalyseur confinée ; et dans lequel lesdits moyens de commande comportent des moyens (40) pour refroidir le milieu gazeux après sortie dudit premier lit de catalyseur et avant l'entrée au second lit de catalyseur.

11. Appareil selon la revendication 8, 9 ou 10, dans lequel lesdits moyens de commande comportent des moyens (24, 34) d'évacuation de la chaleur résultant de la réaction exothermique de ladite quantité de catalyseur confinée à des cadences suffisantes pour maintenir les températures rencontrées dans lesdites parties d'entrée et de sortie au-dessus et au-dessous de la température de seuil, respectivement.

12. Appareil selon la revendication 8, 9, 10 ou 11, dans lequel lesdits moyens d'introduction (19) comportent des moyens d'addition d'oxygène gazeux au milieu gazeux au moins avant l'admission de celui-ci dans ladite partie d'entrée.

13. Appareil selon l'une quelconque des revendications 8 à 12, comprenant en outre :
des moyens (38.n) de subdivision d'au moins ladite partie de sortie de ladite quantité de catalyseur confinée en plusieurs lits de catalyseur séparés (32.n) ;
des moyens (62) de détermination de la quantité de milieu gazeux à traiter à un moment particulier ; et dans lequel lesdits
moyens de passage du milieu gazeux à travers ladite quantité de catalyseur confinée depuis ladite partie d'entrée vers ladite partie de sortie comportent des moyens (39.n) pour diriger la quantité ainsi déterminée de milieu gazeux à écouler à travers seulement autant de lits de catalyseur séparés qu'il y en a d'adressés comme cela est requis pour obtenir un débit d'écoulement du milieu gazeux suffisamment élevé pour éviter toute inversion significative de dioxyde de carbone à monoxyde de carbone, due à une réaction avec l'hydrogène, au moins dans le lit adressé respectif de ladite partie de sortie.

14. Appareil selon la revendication 13, dans lequel lesdits moyens de confinement comportent des moyens pour former au moins un premier lit de catalyseur constituant la partie d'entrée, et plusieurs deuxièmes lits de catalyseur séparés l'un de l'autre et dudit premier lit de catalyseur et constituant collectivement ladite partie de sortie de ladite quantité de catalyseur confinée ; et dans lequel lesdits moyens pour diriger sont interposés entre ledit premier lit de catalyseur et lesdits deuxièmes lits de catalyseur.
